Europäisches Patentamt

European Patent Office

Office européen des brevets

(19)

(11) **EP 1 252 259 B1**

(12) **FASCICULE DE BREVET EUROPEEN**

(45) Date de publication et mention
de la délivrance du brevet:
**31.08.2005 Bulletin 2005/35**

(21) Numéro de dépôt: **00983394.8**

(22) Date de dépôt: **28.11.2000**

(51) Int Cl.⁷: **C10G 35/12**

(86) Numéro de dépôt international:
**PCT/FR2000/003316**

(87) Numéro de publication internationale:
**WO 2001/040407 (07.06.2001 Gazette 2001/23)**

(54) **PROCEDE ET DISPOSITIF POUR LA PRODUCTION D'AROMATIQUES INCLUANT UNE REDUCTION DU CATALYSEUR**

**VERFAHREN UND VORRICHTUNG ZUR HERSTELLUNG AROMATISCHER VERBINDUNGEN UNTER VERWENDUNG KATALYTISCHER REDUKTION**

**METHOD AND DEVICE FOR PRODUCING AROMATIC COMPOUNDS COMPRISING CATALYST REDUCTION**

(84) Etats contractants désignés:
**AT BE CH CY DE DK ES FI FR GB GR IE IT LI LU MC NL PT SE TR**

(30) Priorité: **30.11.1999 FR 9915228**

(43) Date de publication de la demande:
**30.10.2002 Bulletin 2002/44**

(73) Titulaire: **Institut Français du Pétrole**
**92852 Rueil Malmaison Cédex (FR)**

(72) Inventeurs:
• **BRUNET, François-Xavier**
**F-13800 Istres (FR)**

• **CLAUSE, Olivier**
**F-78400 Chatou (FR)**
• **DEVES, Jean-Marie**
**F-78540 Vernouillet (FR)**
• **SANCHEZ, Eric**
**F-92500 Rueil Malmaison (FR)**
• **HOFFMANN, Frédéric**
**F-75010 Paris (FR)**

(56) Documents cités:
**FR-A- 2 657 087**

## Description

L'invention concerne les procédés (de préférence en lit mobile) pour la production à partir d'hydrocarbures de composés aromatiques, dans lesquels on transforme une charge d'hydrocarbures additionnée d'un gaz riche en hydrogène. Elle s'applique plus spécifiquement au reformage régénératif ou à la production plus spécifique de BTX (benzène, toluène, xylènes) avec régénération continue du catalyseur.

Elle concerne plus particulièrement l'étape de réduction du catalyseur, et éventuellement également le premier réacteur dans lequel se déroulent majoritairement les réactions de déshydrogénation des naphtènes contenus dans la charge.

Le catalyseur comprend généralement un support (par exemple formé d'au moins un oxyde réfractaire, le support peut également inclure une ou plusieurs zéolithes), au moins un métal noble (le platine de préférence), et de préférence au moins un métal promoteur (par exemple l'étain ou le rhénium), au moins un halogène et éventuellement un ou plusieurs éléments additionnels (tels que alcalins, alcalino-terreux, lanthanides, silicium, éléments du groupe IV B, métaux non nobles, éléments du groupe III A, etc.). Les catalyseurs de ce type contiennent, par exemple, du platine et au moins un autre métal déposés sur un support alumine chlorée. D'une manière générale, ces catalyseurs sont utilisés pour la conversion d'hydrocarbures naphténiques ou paraffiniques susceptibles de se transformer par déshydrocyclisation et/ou déshydrogénation, dans le reformage ou pour la production d'hydrocarbures aromatiques (par exemple production de benzène, toluène, ortho-, méta- ou paraxylènes). Ces hydrocarbures proviennent du fractionnement des pétroles bruts par distillation, ou d'autres procédés de transformation tels le craquage catalytique ou le vapocraquage.

Ces catalyseurs sont largement décrits dans la littérature.

Les réactions chimiques entrant en jeu dans le procédé de reformage sont nombreuses.

Elles sont bien connues : on peut citer pour les réactions bénéfiques à la formation d'aromatiques et à l'amélioration de l'indice d'octane, la déshydrogénation des naphtènes, l'isomérisation des cycles cyclopentaniques, l'isomérisation des paraffines, la déshydrocyclisation des paraffines, et pour les réactions néfastes, l'hydrogénolyse et l'hydrocraquage des paraffines et des naphtènes. Ces diverses réactions ont des vitesses très différentes et sont fortement endothermiques pour les réactions de déshydrogénation, exothermiques pour les autres réactions. C'est pourquoi le procédé de reformage se déroule dans plusieurs réacteurs subissant des baisses de températures plus ou moins importantes.

L'expérience montre que les réactions de déshydrogénation des naphtènes se passent dans le ou les premiers réacteurs.

Les procédés de reformage ou de production d'aromatiques s'effectuaient à 40 bars il y a 30 ans ; il y a 20 ans, à 15 bars, et aujourd'hui, il est courant de voir des réacteurs de reformage fonctionnant à des pressions inférieures à 10 bars, notamment comprises entre 3 et 8 bars.

Mais cette baisse de pression d'hydrogène, s'accompagne d'une désactivation plus rapide du catalyseur par cokage. Le coke, composé de poids moléculaire élevé et à base essentiellement de carbone et d'hydrogène, se dépose sur les sites actifs du catalyseur. Le rapport molaire H/C du coke formé varie d'environ 0,3 à 1,0. Les atomes de carbone et d'hydrogène forment des structures poly-aromatiques condensées dont le degré d'organisation cristalline est variable en fonction de la nature du catalyseur et des conditions de fonctionnement des réacteurs. Bien que la sélectivité de transformation des hydrocarbures en coke soit très faible, les teneurs en coke accumulé sur le catalyseur peuvent être importantes. Typiquement, pour les unités à lit fixe, ces teneurs sont comprises entre 2,0 et 20,0 à 25,5 % poids. Pour les unités à lit circulant, ces teneurs s'échelonnent de 3,0 à 10,0 % poids en sortie du dernier réacteur. Le coke se dépose majoritairement dans le ou les deux derniers réacteurs.

Le dépôt de coke, plus rapide à basse pression, impose une régénération également plus rapide du catalyseur. Les cycles de régénération actuels peuvent descendre jusqu'à 2-3 jours.

De très nombreux brevets traitent des procédés de reformage ou de production de composés aromatiques avec régénération continue ou séquentielle du catalyseur.

Les schémas de procédés mettent en oeuvre au moins deux réacteurs, dans lesquels circule de haut en bas un lit mobile de catalyseur, traversé par une charge composée d'hydrocarbures et d'hydrogène, charge réchauffée entre chaque réacteur.

L'expérience montre que le premier réacteur est le siège de réactions rapides fortement productrices d'hydrogène.

Le brevet FR-2,657,087 de la demanderesse décrit un tel procédé de reformage.

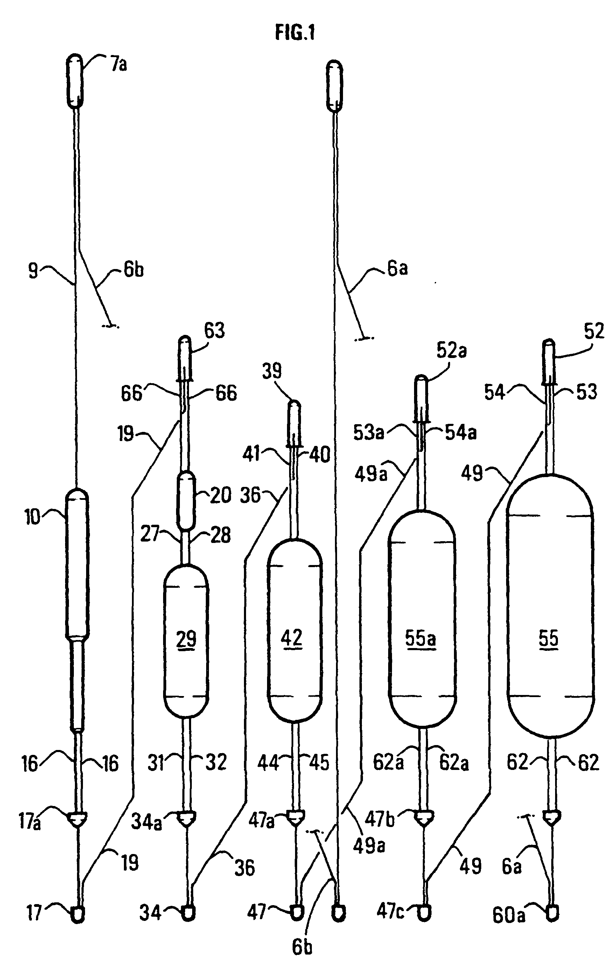

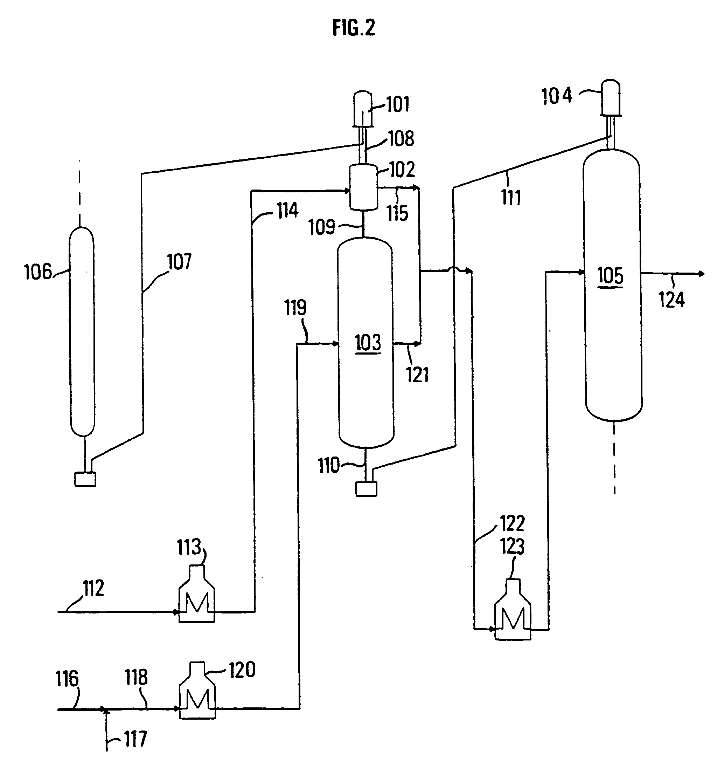

Sur la figure 1 ci-reproduite (correspondant à la figure 2 du brevet FR-2,657,087) on utilise 4 réacteurs. On fait circuler une charge initiale composée d'hydrocarbures et d'hydrogène à travers au moins deux zones de réaction disposées en série, côte à côte, chacune de ces zones de réaction étant de type à lit mobile, la charge circulant successivement dans chaque zone de réaction, et le catalyseur circulant également dans chaque zone de réaction en s'écoulant en continu, sous la forme d'un lit mobile, de haut en bas de chacune d'elle, le catalyseur soutiré en bas de chaque zone de réaction étant transporté dans un courant d'hydrogène au sommet de la zone de réaction suivante, le catalyseur, soutiré en continu du bas de la dernière zone de réaction traversée par la charge, étant ensuite envoyé dans une zone de régénération.

En se reportant à la figure 1, la charge composée d'hydrocarbures et d'hydrogène, selon un rapport H2/HC bien défini, traverse le réacteur 1 (29), est réchauffée, traverse le réacteur 2 (42), est réchauffée, traverse le réacteur 3 (55a), est réchauffée, traverse le réacteur 4 (55), et est envoyée à une section de séparation.

Le catalyseur descend dans le réacteur 1 (29) en étant traversé par la charge, est soutiré de (29) par des conduites (31) et (32), est recollecté dans une trémie (34a), est élevé vers le ballon tampon supérieur (39) du réacteur 2 par l'intermédiaire d'un moyen de levage (34) et (36) ; il s'écoule de ce ballon tampon (39) par des conduites (40) et (41), vers le réacteur 2 (42) ; il est soutiré de (42) par des conduites (44) et (45), est recollecté dans une trémie (47a), est élevé vers le ballon tampon supérieur (52a) du réacteur 3 par l'intermédiaire d'un moyen de levage (47) et (49a) ; il s'écoule de ce ballon tampon (52a) par des conduites (53a) et (54a), vers le réacteur 3 (55a) ; il est soutiré de (55a) par des conduites (62a), est recollecté dans une trémie (47b), est élevé vers le ballon tampon supérieur (52) du réacteur 4 par l'intermédiaire d'un moyen de levage (47c) et (49) ; il s'écoule de ce ballon tampon (52) par des conduites (53) et (54), vers le réacteur 4 (55) ; il est soutiré de (55) par des conduites (62), est recollecté dans une trémie, est élevé vers le ballon tampon supérieur (7a) du régénérateur (10) par l'intermédiaire d'un moyen de levage (60a), (6a) et (6b) ; il s'écoule de ce ballon tampon (7a) par une conduite (9), vers le régénérateur (10) ; il est soutiré de (10) par des conduites (16), est recollecté dans une trémie (17a), est élevé vers le ballon tampon supérieur (63) du réacteur 1 par l'intermédiaire d'un moyen de levage (17) et (19) ; il s'écoule de ce ballon tampon (63) par des conduites (66) vers un ballon de réduction (20), où le catalyseur retrouve au moins partiellement sa forme métallique ; enfin, il s'écoule par les conduites (27) et (28) vers le réacteur 1 (29).

Le traitement de la charge dans le(s) réacteur(s) de reformage ou de production d'aromatiques a lieu généralement sous des pressions de 0,1 à 4 MPa et de préférence 0,3-0,8 MPa, 400-700°C et de préférence 480-600 °C, des vitesses spatiales de 0,1 à 10 h$^{-1}$ et de préférence 1-4 h$^{-1}$ et avec des ratios hydrogène recyclé / hydrocarbures (mol.) de 0,1 à 10 et de préférence 3-10, et plus particulièrement de 3-4 pour le reformage régénératif et 4-6 pour le procédé de production d'aromatiques.

Traditionnellement, une première séparation est effectuée après le dernier réacteur, entre les hydrocarbures et un hydrogène de recyclage qui est réinjecté dans la charge fraîche.

L'effluent non recyclé subit un processus de séparation qui permet d'obtenir un hydrogène dit exporté, qui peut renfermer jusqu'à 10 % volume, ou au mieux 4 %, d'hydrocarbures légers tels que l'éthane et le propane. En comparaison, l'hydrogène de recyclage peut contenir plus de 10 %, généralement plus de 12 % ou de 15 % en volume C2+, de C2H4 à C10 aromatiques.

ques.

Les catalyseurs cokés sont régénérés.

Généralement, la régénération du catalyseur s'effectue principalement en trois étapes :

(a) une étape de combustion où le coke est éliminé par brûlage avec un gaz contenant de l'oxygène,
(b) une étape d'halogénation où le catalyseur est balayé par un gaz halogéné, qui permet de réintroduire de l'halogène sur le catalyseur et de redisperser la phase métallique,
(c) une étape de séchage ou de calcination qui élimine du catalyseur l'eau produite par la combustion du coke.

Elle est complétée par une étape de réduction où le catalyseur est réduit préalablement à l'introduction de la charge, qui est réalisée généralement entre le régénérateur (où sont mises en oeuvre les étapes a, b, c) et le premier réacteur où a lieu la réaction.

La réduction consiste en une transformation chimique de la phase métallique contenue dans le catalyseur. A l'issue de la préparation du catalyseur ou de l'étape de calcination subie par le catalyseur en régénération, le ou les métaux sont présents à la surface du catalyseur sous forme d'oxyde, ou d'oxychlorure pratiquement inactifs catalytiquement. Avant injection de la charge d'hydrocarbures à traiter, il est donc indispensable de procéder à la réduction du catalyseur.

En pratique, cette réduction est réalisée à haute température (entre 300-800 °C et plus généralement 450 et 550 °C) en présence d'hydrogène exporté ou purifié, et pendant des durées généralement comprises entre quelques minutes à plusieurs heures. L'hydrogène purifié est issu d'une unité de purification d'hydrogène exporté. Il contient en général moins de 1% vol de C2+.

Ainsi, il était amené pour la réduction un gaz hydrogène purifié ou exporté et qui était ensuite soutiré et perdu, une fois l'opération de réduction terminée, et il était amené pour la réaction un hydrogène de recyclage (non purifié) et dans un rapport H2/HC unique pour l'unité de réformage.

La présente invention propose d'utiliser en réduction l'hydrogène de recyclage et lorsque le procédé opère avec un lit mobile de catalyseur de combiner éventuellement la zone de réduction et le premier réacteur. Cette disposition permet notamment d'augmenter la quantité d'hydrogène exporté - produit à haute valeur ajouté - disponible. L'invention peut aussi permettre, le cas échéant, de s'affranchir de la purification de l'hydrogène issu du procédé de reformage.

Plus précisément l'invention concerne un procédé de production d'aromatiques à partir de coupe hydrocarbonée à l'aide d'un catalyseur (de préférence circulant en lit mobile), procédé comprenant au moins les étapes successives suivantes se déroulant dans au moins une zone : traitement de la coupe en présence d'hydrogène et mettant en oeuvre une réaction de déshydrogénation des naphtènes, séparation de l'effluent gazeux contenant l'hydrogène, du produit liquide et du catalyseur, régénération du catalyseur, réduction du catalyseur et réintroduction du catalyseur pour l'étape de traitement, et éventuellement de façon préférée recyclage dans l'étape de traitement mettant en oeuvre la déshydrogénation d'une partie au moins de l'effluent gazeux contenant l'hydrogène appelé gaz de recyclage, procédé dans lequel l'étape de réduction est réalisée en présence de gaz de recyclage introduit en quantité telle que la quantité d'hydrogène pur amenée est comprise entre 1-10kg/kg de catalyseur, l'effluent gazeux issu de la réduction étant ensuite séparé du lit de catalyseur.

Ainsi l'invention propose une étape supplémentaire au procédé consistant à recycler dans l'étape de réduction une partie au moins de l'effluent gazeux contenant l'hydrogène (appelé gaz de recyclage) qui a été séparé du liquide et du catalyseur.

Avantageusement, dans la zone de traitement où se déroule la réaction de déshydrogénation des naphtènes, la quantité de gaz de recyclage est telle que le rapport molaire $H_2/HC$ est d'au plus 10, $H_2$ représentant la quantité exprimée en moles d'hydrogène pur amené à la zone de l'étape de traitement dans laquelle se déroule principalement la réaction de déshydrogénation, et HC représentant la quantité, exprimée en moles, d'hydrocarbures dans la coupe entrant dans ladite zone.

L'étape de réduction est généralement réalisée entre 300-800 °C, de préférence entre 400-600°C, le temps de séjour du catalyseur étant de 15 mn-2 h, et de préférence 30 mn-1h30.

Le procédé de production d'aromatiques (et plus particulièrement la zone dans laquelle est réalisée principalement la réaction de déshydrogénation des naphtènes) est conduit à 400-700°C, 0,1-4 MPa, avec des vitesses spatiales de 0,1-10 $h^{-1}$, et les ratios molaires $H_2/HC$ de 0,1 à 10.

Avantageusement, le reformage est réalisé sous 0,3-0,8 MPa, à 480-600 °C, avec des vitesses spatiales de 1-4 $h^{-1}$ et avec des rapports préférés $H_2/HC$ d'au plus 4 voire au plus 2 dans l'étape mettant en oeuvre la déshydrogénation.

Une production d'aromatiques BTX est avantageusement réalisée sous 0,3-0,8 MPa, à 480-600 °C, avec des vitesses spatiales de 1-4 $h^{-1}$ et avec des rapports préférés $H_2/HC$ d'au plus 6 voire au plus 3 dans l'étape mettant en oeuvre la déshydrogénation.

L'étape de traitement peut être réalisée dans une ou plusieurs zones ; ainsi pour le reformage montré figure 1, quatre zones de traitement sont utilisées.

L'invention porte donc sur l'étape de réduction réalisée sur le catalyseur et éventuellement sur la première zone (ou premier réacteur) de l'étape de traitement.

L'invention sera mieux expliquée à partir de la figure 2.

Le catalyseur circule du régénérateur (106) au ballon tampon supérieur (101) du premier réacteur (103), par l'intermédiaire d'un moyen de transfert (107) qui est par exemple un élévateur ou lift (107) ; il descend gravitairement par des conduites (108) vers la zone de réduction (102). Cette zone de réduction peut être axiale ou radiale et peut comporter une ou plusieurs sections. Le catalyseur sortant de la zone de réduction passe par la (les) conduite(s) (109) dans le premier réacteur (103), duquel il est soutiré par des conduites (110) ; il est ensuite envoyé au ballon tampon supérieur (104) du deuxième réacteur (105) par un moyen de transfert (111), avantageusement un élévateur.

Le gaz contenant l'hydrogène utilisé pour l'étape de réduction est amené par la conduite (112). Avantageusement, il est amené à la température de l'étape de réduction, par au moins un moyen de chauffage (113). Le flux résultant (114) réduit le catalyseur dans l'enceinte (102). Il en ressort un flux (115).

A la charge, convoyée par au moins une conduite (116), est ajouté un gaz contenant de l'hydrogène par au moins une conduite (117) et le flux résultant entre par la conduite (119) dans le premier réacteur dans lequel ont lieu principalement les réactions de déshydrogénation des naphtènes.

Soit $(H2)_1$ la quantité en moles d'hydrogène (exprimée en hydrogène pur) amenée au premier réacteur (103) (étant exclu l'éventuel hydrogène provenant de la réduction) par la conduite (119)

$(H2)_{Red}$ la quantité en moles d'hydrogène (exprimée en hydrogène pur) amenée au réacteur (102) par la conduite (114)

$(H2)_2$ la quantité en moles d'hydrogène (exprimée en hydrogène pur) amenée au réacteur (105) dans lequel se déroule l'étape ultérieure (ne comprenant pas principalement les réactions de déshydrogénation des naphtènes)

(HC) la quantité en moles de charge entrant dans le premier réacteur

$(HC)_2$ la quantité en moles de charge entrant dans le réacteur de l'étape ultérieure (105).

Sur la figure 2, $(HC)_2$ est égal à HC puisque tout l'effluent du premier réacteur est traité dans le second réacteur. On peut envisager le cas où une partie seulement de l'effluent de la première étape est traitée dans l'étape ultérieure, et le cas où de la charge est ajoutée à l'effluent de la première étape avant le réacteur de l'étape ultérieure.

Selon le procédé, la quantité $(H2)_1$ est telle que

$$\frac{(H2)_1}{HC} + \frac{(H2)Red}{HC} \leq \frac{(H2)_2}{(HC)_2}$$

D'une façon générale, $\frac{(H2)_1}{HC}$ est d'au plus 10, et de préférence de 0,1 à 10.

Toutes les quantités sont exprimées en moles.

La quantité d'hydrogène amenée à l'étape de réduction (calculée en hydrogène pur) est choisie de telle sorte que la PPH par rapport au catalyseur soit comprise entre 1 et 10 kg d'hydrogène/kg de catalyseur/h, de préférence entre 2 et 6 kg d'hydrogène/kg de catalyseur/h. Le débit de gaz est suffisant pour éliminer les calories apportées par d'éventuelles réactions de craquage des hydrocarbures en C2+ contenus dans le gaz de réduction.

La qualité de l'hydrogène est moins critique que dans l'art antérieur. On peut ainsi avantageusement employer en réduction un gaz pouvant contenir des quantités importantes d'impuretés, par exemple 15% en volume de C2+.

En ce qui concerne le premier réacteur (réactions de déshydrogénation des naphtènes principalement), on utilise très avantageusement d'hydrogène de recyclage mais l'hydrogène purifié et l'hydrogène exporté pourraient être utilisés bien que cette solution soit économiquement peu intéressante.

On notera que le rapport H2/HC exprimé précédemment est le rapport utilisé classiquement dans le procédé de traitement et plus particulièrement dans la première zone. Il est ainsi préférentiellement de 2-4 pour le reformage et de 3-6 pour la production d'aromatiques.

Cela signifie que le rapport $(H2)_1$/HC, dans la zone de l'étape de traitement où a lieu la réaction de déshydrogénation des naphtènes, est inférieur au rapport H2/HC de l'art antérieur lorsque (figure 2) l'hydrogène amené pour la réduction est extrait de l'étape de réduction et ne passe pas dans ladite zone (excepté la faible partie qui passe avec le lit mobile de catalyseur). Ainsi, en mettant en oeuvre le procédé le rapport $(H2)_1$ /HC au niveau de ladite zone a pu être réduit et en conséquence la réaction de déshydrogénation des naphtènes est favorisée.

Avantageusement, le flux (118) est amené à la température de réaction du premier réacteur (103) par au moins un moyen de chauffage (120). Le flux résultant (119) réagit dans le réacteur (103), et donne un effluent (121).

De préférence, les flux gazeux (115) et (121) sont mélangés dans une conduite (122) et constituent la charge du réacteur suivant (105), qui est avantageusement amenée à la température de réaction par au moins un moyen de chauffage (123). Dans cette disposition préférée, le mélange de l'effluent hydrogène de réduction avec l'effluent du premier réacteur, permet d'obtenir un rapport $(H2)_2$/$(HC)_2$ en entrée de deuxième réacteur qui peut être plus élevé que dans l'art antérieur, favorisant ainsi la transformation des hydrocarbures après déshydrogénation.

Ainsi les effluents gazeux issus de la réduction et de l'étape mettant en oeuvre la déshydrogénation sont introduits dans au moins une étape suivant la déshydrogénation.

Il est même possible d'ajouter du gaz de recyclage dans ladite étape suivant la déshydrogénation.

De façon plus générale, au moins une partie de l'effluent gazeux issu de la réduction peut être introduit dans l'étape mettant en oeuvre la déshydrogénation et/ou au moins une étape suivante la déshydrogénation.

L'effluent sortant du réacteur (105) par la conduite (124) est ensuite traité conformément au procédé de traitement classique, par exemple il est envoyé vers une troisième zone de traitement, il peut être soutiré etc ... Il en est de même pour le catalyseur.

L'invention consiste donc à réduire l'apport d'hydrogène par la ligne (119) dans la première zone de l'étape de traitement, si on compare par rapport à l'art antérieur, et à augmenter la quantité d'hydrogène dans l'étape de réduction. Dans tous les cas, la quantité d'hydrogène utilisée en réduction est maîtrisée.

Cette quantité d'hydrogène utilisée en réduction peut être modulée selon les besoins de l'exploitant. Elle peut correspondre au maintien du rapport H2/HC global (réduction + 1" réacteur). Elle peut aboutir à un rapport H2/HC global supérieur mais tout en maintenant un déficit d'hydrogène dans le 1$^{er}$ réacteur. Il en résulte au niveau du 2ieme réacteur (après déshydrogénation prépondérante des naphtènes) un maintien du rapport H2/HC (par rapport à l'art antérieur) ou une augmentation de ce rapport favorisant les autres réactions. Une injection supplémentaire d'hydrogène peut également être faite.

Il en résulte des avantages très importants :

(a) un débit important de l'hydrogène par rapport à la quantité de catalyseur en zone de réduction qui limite les effets thermiques néfastes de l'hydrogénolyse et de l'hydrocraquage des hydrocarbures en C2+ présents éventuellement dans l'hydrogène utilisé pour la réduction, de sorte que le procédé de l'invention peut fonctionner avec l'hydrogène de recyclage et en l'absence de purification,

(b) le premier réacteur est le siège essentiellement de réactions de déshydrogénation des naphtènes (pour les unités de reformage ou de production de composés aromatiques) fortement productrices d'hydrogène ; une diminution de la quantité d'hydrogène introduit dans la charge de ce premier réacteur favorise ces réactions de déshydrogénation qui sont plus rapides. Malgré ces conditions plus favorables au cokage, on a pu constater que le cokage n'a pas le temps de se développer de manière sensible par rapport à la situation antérieure.

Pour l'exploitant l'invention se traduit par des gains importants résultant de :

(a) la possibilité d'utiliser un hydrogène moins pur en réduction et de limiter le temps de résidence en zone de réduction,
(b) la limitation de la déchloration et du frittage métallique en zone de réduction, et ainsi d'augmenter la durée de vie du catalyseur,
(c) l'optimisation du rapport H2/HC dans le premier réacteur ce qui permet de réduire la quantité de catalyseur nécessaire dans ce premier réacteur pour la déshydrogénation des naphtènes.

L'invention concerne aussi un dispositif pour la production d'aromatique mettant en oeuvre le procédé selon l'invention.

Ledit dispositif pour production d'aromatiques à partir de coupe hydrocarbonée à l'aide d'un catalyseur circulant en lit mobile, comporte :

- au moins une zone pour le traitement de la coupe mettant en oeuvre une réaction de déshydrogénation des naphtènes, ladite zone étant munie d'au moins une conduite pour l'introduction de la coupe, d'au moins une conduite pour soutirer ladite coupe traitée, d'au moins une conduite pour l'introduction du catalyseur en haut de ladite zone et d'au moins une conduite pour la sortie du catalyseur et située en bas de ladite zone, ladite zone comportant en outre au moins une conduite pour l'introduction d'un gaz contenant de l'hydrogène, et comportant également au moins une conduite pour l'extraction d'un flux gazeux ;
- au moins une zone pour la séparation du catalyseur, du produit liquide et de l'effluent gazeux contenant de l'hydrogène ;
- au moins une zone pour la régénération du catalyseur ;
- au moins une zone pour la réduction du catalyseur régénéré relié à ladite zone mettant en oeuvre la déshydrogénation des naphtènes de sorte que la catalyseur réduit entre dans ladite zone de déshydrogénation par ladite conduite pour l'introduction du catalyseur, ladite zone de réduction étant munie

  . d'au moins une conduite pour l'introduction de gaz contenant l'hydrogène,
  . et d'au moins une conduite pour l'extraction d'un flux gazeux ;

- au moins une conduite pour le recyclage d'au moins une partie de l'effluent gazeux contenant l'hydrogène à partir de ladite zone de séparation vers ladite zone mettant en oeuvre la réaction de déshydrogénation ;
- le dispositif comporte également au moins une conduite pour le recyclage d'au moins une partie de l'effluent gazeux contenant l'hydrogène dans la conduite pour l'introduction de gaz dans ladite zone de réduction.

Avantageusement, le dispositif comporte au moins une zone réactionnelle située après ladite zone mettant en oeuvre la réaction de déshydrogénation, ladite zone réactionnelle comportant au moins une conduite pour l'entrée du catalyseur et une conduite pour sa sortie, au moins une conduite pour l'introduction d'un gaz contenant de l'hydrogène et au moins une conduite pour la sortie d'un effluent gazeux, et au moins une conduite pour l'entrée de l'effluent réactionnel issu de la zone précédente et une conduite pour l'effluent réactionnel issu de la présente zone, dispositif dans lequel la conduite pour l'introduction d'un gaz contenant de l'hydrogène est reliée aux conduites pour l'extraction des flux gazeux issus de la zone de déshydrogénation et de la zone de réduction.

Avantageusement la conduite pour l'introduction d'un gaz contenant de l'hydrogène est également reliée à une conduite amenant de l'effluent gazeux recyclé.

L'exemple suivant illustre l'invention sans en limiter la portée.

Le catalyseur circule à 800 kg/h et 90 839 kg/h de charge sont traités. La réduction est effectuée avec 18 294 kg/h d'un gaz riche en hydrogène de pureté 83.7 % en volume d'hydrogène, de masse molaire 9.6 kg/kmole, avec une PPH en H2 de 4 h$^{-1}$, et un temps de séjour du catalyseur de 1 heure. Dans la première zone de traitement (premier réacteur), on injecte 9 976 kg/h de gaz riche en hydrogène de pureté 83.7 % en volume d'hydrogène, de masse molaire 9.6 kg/kmole, dans la charge à 90839 kg/h. On obtient alors un rapport H2/HC égal à 1.13.

Dans l'art antérieur, pour le même débit de charge et de catalyseur, on injectait dans le premier réacteur un gaz d'hydrogène de recyclage de masse molaire 9,6 kg/kmole, contenant 83,7 % en volume d'hydrogène, au débit de 28270 kg/h. Tout l'effluent passait dans le deuxième réacteur. Le rapport molaire H2/HC résultant était égal à 3,2. La réduction était effectuée avec un gaz riche à 92,1 % en volume d'hydrogène, de masse molaire 4,4 kg/kmole, sous un débit de 600 kg/h, et pour un temps de séjour du catalyseur de 2 heures.

On peut constater qu'avec l'utilisation du procédé selon la présente invention, on peut utiliser de l'hydrogène non purifié c'est-à-dire contenant plus de 10 % en volume d'impuretés, et généralement plus de 15 % en volume, tant au niveau du présent réacteur de reformage qu'au niveau du réacteur réducteur ; et le débit de gaz riche en hydrogène injecté dans la charge du premier réacteur est diminué de la quantité ajoutée en réduction.

Ces conditions sont modulables.

En effet, dans le cas où on souhaite un rapport H2/HC inférieur à 1,1, il faudra injecter le gaz riche en hydrogène restant (qui n'a pas alors été injecté dans la charge qui entre du premier réacteur) dans l'effluent du premier réacteur avant son entrée dans le second réacteur.

Si un rapport $(H2)_1$/HC plus élevé dans le premier réacteur est souhaité, il est possible de réduire le débit d'hydrogène H2 en réduction. Ainsi avec une PPH H2 en zone de réduction égale à 2 h$^{-1}$ par exemple, on peut alors opérer dans les conditions de l'exemple un rapport $(H2)_1$/HC égal à 1.4 dans le premier réacteur.

Il est possible d'avoir un temps de séjour et une PPH H2 en réduction, et un rapport H2/HC dans le premier réacteur tels que le cas de l'exemple n'est pas applicable. Il se peut que les quantités d'hydrogène de réduction et d'hydrogène injecté dans la charge ne soient pas suffisantes pour avoir un rapport H2/HC convenable en entrée de second réacteur. Dans ce cas, il est possible d'installer une injection supplémentaire de gaz riche en hydrogène dans les effluents sortant du premier réacteur, ou du moins dans la charge du second réacteur.

On a décrit ici l'utilisation en réduction du gaz de recyclage pour un procédé en lit mobile. Mais elle peut également concerner un procédé en lit fixe.

On notera que cette utilisation en lit mobile est très avantageusement liée à l'emploi d'un rapport H2/HC réduit dans le premier réacteur, mais que toutes valeurs plus hautes du rapport H2/HC dans ce réacteur sont possibles, notamment celles de l'art antérieur.

**Revendications**

1. Procédé de production d'aromatiques à partir de coupe hydrocarbonée à l'aide d'un catalyseur, procédé comprenant au moins les étapes successives suivantes se déroulant dans au moins une zone : traitement de la coupe en présence d'hydrogène et mettant en oeuvre une réaction de déshydrogénation des naphtènes, séparation de l'effluent gazeux contenant l'hydrogène pour former un gaz dit de recyclage, du liquide et du catalyseur, régénération du catalyseur, réduction du catalyseur et réintroduction du catalyseur pour l'étape de traitement, procédé **caractérisé en ce que** l'étape de réduction est réalisée en présence de gaz de recyclage introduit en quantité telle que la quantité d'hydrogène pur amenée est comprise entre 1-10kg/kg de catalyseur, l'effluent issu de la réduction étant ensuite séparé du lit de catalyseur.

2. Procédé selon la revendication 1, dans lequel le catalyseur circule en lit mobile.

3. Procédé selon l'une des revendications précédentes incluant un recyclage dans l'étape de traitement mettant en oeuvre la déshydrogénation d'une partie au moins de l'effluent gazeux contenant l'hydrogène appelé gaz de recyclage,

4. Procédé selon l'une des revendications précédentes, **caractérisé en ce que** l'étape de réduction est réalisée entre 300-800 °C, le temps de séjour du catalyseur étant de 15 mn-2 h.

5. Procédé selon l'une des revendication précédentes, **caractérisé en ce que** l'étape de réduction est réalisée entre 400-600°C.

6. Procédé selon l'une des revendications précédentes, **caractérisé en ce que** le procédé est réalisé à 400-700 °C, 0,1-4 MPa, avec des vitesses spatiales de 0,1-10 h$^{-1}$ et des ratios molaires $(H2)_1$/HC d'au plus 10.

7. Procédé selon l'une des revendications précédentes, **caractérisé en ce qu'**il s'agit d'un reformage réalisé sous 0,3-0,8 MPa, à 480-600 °C, avec des vitesses spatiales de 1-4 h$^{-1}$ et avec des rapports $(H2)_1$/HC d'au plus 4 dans l'étape mettant en oeuvre la déshydrogénation.

8. Procédé selon l'une des revendications 1 à 6, **caractérisé en ce qu'**il s'agit d'une production d'aromatiques opérant sous 0,3-0,8 MPa, à 480-600 °C, avec des vitesses spatiales de 1-4 h$^{-1}$ et des rapports $(H2)_1$/HC d'au plus 6 dans l'étape mettant en oeuvre la déshydrogénation.

9. Procédé selon l'une des revendications précédentes, **caractérisé en ce que** le gaz de recyclage contient plus de 10 % volume d'impuretés C2+.

10. Procédé selon l'une des revendications précédentes, **caractérisé en ce que** au moins une partie de l'effluent gazeux issu de la réduction est introduit dans l'étape mettant en oeuvre la déshydrogénation et/ou est introduit au moins une étape suivant la déshydrogénation.

11. Procédé selon l'une des revendications précédentes, **caractérisé en ce qu'**il est ajouté du gaz de recyclage dans ladite étape suivant la déshydrogénation.

12. Dispositif pour la production d'aromatiques à partir de coupe hydrocarbonée à l'aide d'un catalyseur circulant en lit mobile, comportant :

   - au moins une zone pour le traitement de la coupe mettant en oeuvre une réaction de déshydrogénation des naphtènes, ladite zone étant munie d'au moins une conduite pour l'introduction de la coupe, d'au moins une conduite pour soutirer ladite coupe traitée, d'au moins une conduite pour l'introduction du catalyseur en haut de ladite zone et d'au moins une conduite pour la sortie du catalyseur et située en bas de ladite zone, ladite zone comportant en outre au moins une conduite pour l'introduction d'un gaz contenant de l'hydrogène, et comportant également au moins une conduite pour l'extraction d'un flux gazeux ;

- au moins une zone pour la séparation du catalyseur, du produit liquide et de l'effluent gazeux contenant de l'hydrogène ;
- au moins une zone pour la régénération du catalyseur ;
- au moins une zone pour la réduction du catalyseur régénéré relié à ladite zone mettant en oeuvre la déshydrogénation des naphtènes de sorte que la catalyseur réduit entre dans ladite zone de déshydrogénation par ladite conduite pour l'introduction du catalyseur, ladite zone de réduction étant munie

  . d'au moins une conduite pour l'introduction de gaz contenant l'hydrogène,
  . et d'au moins une conduite pour l'extraction d'un flux gazeux ;

- au moins une conduite pour le recyclage d'au moins une partie de l'effluent gazeux contenant l'hydrogène à partir de ladite zone de séparation vers ladite zone mettant en oeuvre la réaction de déshydrogénation ;

dispositif **caractérisé en ce qu'**il compte également au moins une conduite pour le recyclage d'au moins une partie de l'effluent gazeux contenant l'hydrogène dans la conduite pour l'introduction de gaz dans ladite zone de réduction.

**13.** Dispositif selon la revendication 12, **caractérisé en ce qu'**il comporte au moins une zone réactionnelle située après ladite zone mettant en oeuvre la réaction de déshydrogénation, ladite zone réactionnelle comportant au moins une conduite pour l'entrée du catalyseur et une conduite pour sa sortie, au moins une conduite pour l'introduction d'un gaz contenant de l'hydrogène et au moins une conduite pour la sortie d'un effluent gazeux, et au moins une conduite pour l'entrée de l'effluent réactionnel issu de la zone précédente et une conduite pour l'effluent réactionnel issu de la présente zone, dispositif dans lequel la conduite pour l'introduction d'un gaz contenant de l'hydrogène est reliée aux conduites pour l'extraction des flux gazeux issus de la zone de déshydrogénation et de la zone de réduction.

**14.** Dispositif selon la revendication 13, **caractérisé en ce que** la conduite pour l'introduction d'un gaz contenant de l'hydrogène est également reliée à une conduite amenant de l'effluent gazeux recyclé.

**Claims**

**1.** A process for producing aromatic compounds from a hydrocarbon cut using a catalyst, the process comprising at least the following successive steps carried out in at least one zone: treating the cut in the presence of hydrogen using at least one naphthene dehydrogenation reaction; separating out a gaseous hydrogen-containing effluent to form a gas, termed the recycle gas, a liquid product and the catalyst; regenerating the catalyst; reducing the catalyst and re-introducing the catalyst into the treatment step; **characterized in that** the reduction step is carried out in the presence of a recycle gas introduced in a quantity such that the quantity of pure hydrogen supplied is in the range 1-10 kg/kg of catalyst, the effluent from the reduction step then being separated from the catalyst bed.

**2.** A process according to claim 1, in which the catalyst circulates as a moving bed.

**3.** A process according to any one of the preceding claims, including recycling at least a portion of the gaseous hydrogen-containing effluent, termed the recycle gas, to the treatment step implementing dehydrogenation.

**4.** A process according to any one of the preceding claims, **characterized in that** the reduction step is carried out between 300-800°C, the catalyst residence time being 15 min-2 h.

**5.** A process according to any one of the preceding claims, **characterized in that** the reduction step is carried out between 400-600°C.

**6.** A process according to any one of the preceding claims, **characterized in that** the process is carried out at 400-700°C, at 0.1-4 MPa, with space velocities of 0.1-10 $h^{-1}$ and $(H_2)_1$/HC mole ratios of at most 10.

**7.** A process according to any one of the preceding claims, **characterized in that** it concerns reforming carried out at 0.3-0.8 MPa, at 480-600°C, with space velocities of 1-4 $h^{-1}$ and with $(H_2)_1$/HC ratios of at most 4 in the step implementing dehydrogenation.

**8.** A process according to any one of claims 1 to 6, **characterized in that** it concerns aromatic compound production carried out at 0.3-0.8 MPa, at 480-600°C, with space velocities of 1-4 $h^{-1}$ and $(H_2)_1$/HC ratios of at most 6 in the step implementing dehydrogenation.

**9.** A process according to any one of the preceding claims, **characterized in that** the recycle gas contains more than 10% by volume of C2+ impurities.

10. A process according to any one of the preceding claims, **characterized in that** at least a portion of the gaseous effluent from the reduction step is introduced into the step implementing dehydrogenation and/or is introduced into at least one step following dehydrogenation.

11. A process according to any one of the preceding claims, **characterized in that** recycle gas is added to said step following dehydrogenation.

12. An apparatus for producing aromatic compounds from a hydrocarbon cut using a catalyst circulating in a moving bed, comprising:

   • at least one zone for treating the cut involving a naphthene dehydrogenation reaction, said zone being provided with at least one line for introducing the cut, at least one line for withdrawing a treated cut, at least one line for introducing catalyst into the top of said zone and at least one line for withdrawing catalyst located at the bottom of said zone, said zone also comprising at least one line for introducing a hydrogen-containing gas, and also comprising at least one gaseous stream withdrawal line;
   • at least one zone for separating catalyst, liquid product and gaseous hydrogen-containing effluent;
   • at least one catalyst regenerating zone;
   • at least one zone for reducing regenerated catalyst connected to said zone carrying out naphthene dehydrogenation such that the reduced catalyst enters said dehydrogenation zone via said line for introducing catalyst, said reduction zone being provided with:

      • at least one line for introducing hydrogen-containing gas;
      • and at least one line for withdrawing a gas stream;

   • at least one line for recycling at least a portion of the gaseous hydrogen-containing effluent from said separation zone to said zone carrying out the dehydrogenation reaction;

   said apparatus being **characterized in that** it also comprises at least one line for recycling at least a portion of the gaseous hydrogen-containing effluent to the line for introducing gas into said reduction zone.

13. An apparatus according to claim 12, **characterized in that** it comprises at least one reaction zone located after said zone carrying out the dehydrogenation reaction, said reaction zone comprising at least one catalyst inlet line and a catalyst withdrawal line, at least one line for introducing a hydrogen-containing gas and at least one line for withdrawing a gaseous effluent, and at least one line for entry of a reaction effluent from the preceding zone and a line for the reaction effluent from the present zone, in which apparatus the line for introducing a hydrogen-containing gas is connected to lines for withdrawing gaseous streams from the dehydrogenation zone and the reduction zone.

14. An apparatus according to claim 13, **characterized in that** the line for introducing a hydrogen-containing gas is also connected to a line supplying recycled gaseous effluent.

**Patentansprüche**

1. Verfahren zur Herstellung von Aromaten aus einer Kohlenwasserstofffraktion mithilfe eines Katalysators, welches Verfahren wenigstens die folgenden aufeinander folgenden Stufen umfasst, welche in wenigstens einer Zone ablaufen: Behandlung der Fraktion in Gegenwart von Wasserstoff und Ausführen einer Dehydrierungsreaktion der Naphthene, Trennung des wasserstoffhaltigen Gasabstroms, um ein so genanntes Rezyklierungsgas zu bilden, von der Flüssigkeit und dem Katalysator, Regenerierung des Katalysators, Reduktion des Katalysators und Wiedereinführung des Katalysators für die Behandlungsstufe, wobei das Verfahren **dadurch gekennzeichnet ist, dass** die Reduktionsstufe in Gegenwart von Rezyklierungsgas durchgeführt wird, das in einer Menge derart eingeführt wird, dass die Menge zugeführten reinen Wasserstoffs zwischen 1 - 10 kg pro kg Katalysator liegt, wobei der Abstrom aus der Reduktion anschließend von dem Katalysatorbett getrennt wird.

2. Verfahren nach Anspruch 1, bei dem der Katalysator im beweglichen Bett zirkuliert.

3. Verfahren nach einem der vorhergehenden Ansprüche, umfassend eine Rezyklierung in der Behandlungsstufe, die die Dehydrierung eines Teils wenigstens des wasserstoffhaltigen Gasabstroms, genannt Rezyklierungsgas, durchführt.

4. Verfahren nach einem der vorhergehenden Ansprüche, **dadurch gekennzeichnet, dass** die Reduktionsstufe zwischen 300 - 800°C durchgeführt wird, wobei die Verweildauer des Katalysators 15 min - 2 h ist.

5. Verfahren nach einem der vorhergehenden Ansprüche, **dadurch gekennzeichnet, dass** die Reduktionsstufe zwischen 400 - 600°C durchgeführt wird.

6. Verfahren nach einem der vorhergehenden Ansprüche, **dadurch gekennzeichnet, dass** das Verfahren bei 400 - 700°C, 0,1 - 4 MPa mit Raumgeschwindigkeiten von 0,1 - 10h$^{-1}$ und Molverhältnissen (H2)$_1$/HC von wenigstens 10 durchgeführt wird.

7. Verfahren nach einem der vorhergehenden Ansprüche, **dadurch gekennzeichnet, dass** es sich um ein Reformieren handelt, das unter 0,3 - 0,8 MPa bei 480 - 600°C mit Raumgeschwindigkeiten von 1 bis 4 h$^{-1}$ und mit Verhältnissen (H2)$_1$/HC von höchstens 4 in der Stufe, die die Dehydrierung durchführt.

8. Verfahren nach einem der Ansprüche 1 bis 6, **dadurch gekennzeichnet, dass** es sich um eine Herstellung von Aromaten handelt, die unter 0,3 - 0,8 MPa bei 480 - 600°C mit Raumgeschwindigkeiten von 1 - 4 h$^{-1}$ und Verhältnissen (H2)$_1$/HC von höchstens 6 in der Stufe arbeitet, die die Dehydrierung durchführt.

9. Verfahren nach einem der vorhergehenden Ansprüche, **dadurch gekennzeichnet, dass** das Rezyklierungsgas mehr als 10 Vol.-% C2+ Verunreinigungen enthält.

10. Verfahren nach einem der vorhergehenden Ansprüche, **dadurch gekennzeichnet, dass** wenigstens ein Teil des Gasabstroms aus der Reduktion eingeführt wird in die Stufe, die die Dehydrierung durchführt, und/oder eingeführt in wenigstens eine Stufe, die der Dehydrierung folgt.

11. Verfahren nach einem der vorhergehenden Ansprüche, **dadurch gekennzeichnet, dass** Rezyklierungsgas in die Stufe eingeführt wird, die der Dehydrierung folgt.

12. Vorrichtung zur Herstellung von Aromaten aus einer Kohlenwasserstofffraktion mithilfe eines Katalysators, der im beweglichen Bett zirkuliert, umfassend:

    - wenigstens eine Zone für die Behandlung der Fraktion, welche eine Dehydrierungsreaktion der Naphthene durchführt, wobei die Zone mit wenigstens einer Leitung zur Einführung der Fraktion, wenigstens einer Leitung zum Abziehen der behandelten Fraktion, wenigstens einer Leitung zur Einführung des Katalysators oben in die Zone und wenigstens einer Leitung zum Austritt des Katalysators und unten an der Zone angeordnet ausgerüstet ist, wobei die Zone außerdem wenigstens eine Leitung zum Einführen eines wasserstoffhaltigen Gases umfasst und ebenfalls wenigstens eine Leitung zum Abziehen eines Gasstroms umfasst;

    - wenigstens eine Zone zur Trennung des Katalysators von dem flüssigen Produkt und dem wasserstoffhaltigen Gasabstrom;

    - wenigstens eine Zone zur Regenerierung des Katalysators;

    - wenigstens eine Zone zur Reduktion des regenerierten Katalysators, verbunden mit der Zone, die die Dehydrierung der Naphthene durchführt, derart, dass der reduzierte Katalysator in die Dehydrierungszone durch die Leitung zur Einführung des Katalysators eintritt, wobei die Reduktionszone ausgerüstet ist mit

        ■ wenigstens einer Leitung zur Einführung wasserstoffhaltigen Gases,

        ■ und wenigstens einer Leitung zum Abziehen eines Gasstroms;

    - wenigstens eine Leitung zur Rezyklierung wenigstens eines Anteils des wasserstoffhaltigen Gasabstroms aus der Trennzone, zu der Zone, die die Dehydrierungsreaktion durchführt;

    wobei die Vorrichtung **dadurch gekennzeichnet ist, dass** sie auch wenigstens eine Leitung zum Rezyklieren wenigstens eines Teils des wasserstoffhaltigen Gasstroms in die Leitung zur Einführung von Gas in die Reduktionszone umfasst.

13. Vorrichtung nach Anspruch 12, **dadurch gekennzeichnet, dass** sie wenigstens eine Reaktionszone umfasst, die hinter der Zone gelegen ist, die die Dehydrierungsreaktion durchführt, wobei die Reaktionszone wenigstens eine Leitung zum Eintritt des Katalysators und eine Leitung für dessen Austritt, wenigstens eine Leitung zur Einführung eines wasserstoffhaltigen Gases und wenigstens eine Leitung zum Austritt eines Gasstroms umfasst, und wenigstens eine Leitung zum Eintritt des Reaktionsabstroms aus der vorhergehenden Zone und eine Leitung für den Reaktionsabstrom aus der gegenwärtigen Zone, bei welcher Vorrichtung die Leitung zur Einführung eines wasserstoffhaltigen Gasstroms mit den Leitungen zum Abzug der Gasströme aus der Dehydrierungszone und aus der Reduktionszone verbunden ist.

14. Vorrichtung nach Anspruch 13, **dadurch gekennzeichnet, dass** die Leitung zur Einführung eines wasserstoffhaltigen Gases ebenfalls mit einer Leitung verbunden ist, die den rezyklierten Gasabstrom zuführt.

## FIG.1

FIG.2